# EUROPÄISCHE PATENTSCHRIFT

(11) **EP 1 069 449 B1**
(45) Veröffentlichungstag und Bekanntmachung des Hinweises auf die Patenterteilung: **30.11.2005**
(21) Anmeldenummer: 00111442.0
(22) Anmeldetag: 27.05.2000
(51) Int. Cl.: G02B 21/16

(54) **Beleuchtungseinrichtung für ein DUV-Mikroskop**
Illumination system for a deep ultraviolet microscope
Système d'illumination d'un microscope pour l'ultraviolet profond

(30) Priorität: 10.07.1999 DE 19931954
(43) Veröffentlichungstag der Anmeldung: 17.01.2001
(73) Patentinhaber: Leica Microsystems Semiconductor GmbH, 35578 Wetzlar (DE)
(72) Erfinder: Danner, Lambert, 35584 Wetzlar-Naunheim (DE); Vollrath, Wolfgang, 57299 Burbach (DE); Eisenkrämer, Frank, 35444 Biebertal (DE); Osterfeld, Martin, 35578 Wetzlar (DE); Veith, Michael, 35578 Wetzlar (DE)
(74) Vertreter: Reichert, Werner Franz

(56) Entgegenhaltungen:
- DE-A- 2 010 540
- US-A- 5 867 329
- PATENT ABSTRACTS OF JAPAN vol. 1997, no. 03, 31. März 1997 (1997-03-31) & JP 08 313728 A (NIKON CORP), 29. November 1996 (1996-11-29)

## Beschreibung

Die Erfindung betrifft eine Beleuchtungseinrichtung für ein DUV-Mikroskop mit den Merkmalen des Oberbegriffs des unabhängigen Anspruchs 1, wie bekannt aus DE-A-2 010 540.

Beleuchtungseinrichtungen für DUV-Mikroskope müssen ein schmales DUV-Wellenlängenband aus dem DUV-Wellenlängenbereich (DUV = deep ultraviolet, ca. 200 bis 300 nm) für die Beleuchtung bereitstellen, für welches die Mikroskop-Optik korrigiert ist. Das DUV-Wellenlängenband wird charakterisiert durch die spektrale Spitzenwertlage und die Halbwertsbreite seines Peaks. Zur Erzeugung eines solchen DUV-Wellenlängenbandes sind sowohl Transmissions-Schmalband-Filtersysteme als auch Reflexionsfilter-Systeme bekannt. Diese Filtersysteme werden in den Beleuchtungsstrahlengang eingefügt und filtern aus dem Lichtspektrum einer Lichtquelle ein gewünschtes DUV-Wellenlängenband als Nutzlicht aus. Das Mikroskopbild wird mit einer DUVempfindlichen TV-Kamera sichtbar gemacht.

Transmissions-Schmalband-Filtersysteme im DUV liefern sehr schmale Peaks, dafür liegt die maximale Transmission und damit der Spitzenwert des Peaks bei nur etwa 20 Prozent der Lichtintensität vor dem Transmissions-Schmalband-Filtersystem. Derart schwache Intensitäten erfordern jedoch besonders empfindliche und damit technologisch aufwendige und sehr teure Kameras. Der wesentliche Nachteil dieser Kameras (z.B. bei sogenannten "Frame-Transfer-CCD-Imagern") ist jedoch, daß sie sehr lange Belichtungs- und Bildauslesezeiten haben, so daß eine "life"-Beobachtung des Objektes unmöglich ist. Dies ist insbesondere störend, wenn der Objekttisch mit dem aufliegenden Objekt verfahren werden muß.

Bekannte Reflexionsfilter-Systeme bestehen aus mehreren Reflexionsfiltern, an denen das Licht der Lichtquelle jeweils unter einem Einfallswinkel α = 45° auftrifft und reflektiert wird. Bei diesen bekannten Reflexionsfilter-Systemen liegt der Spitzenwert des Peaks deutlich über 90 Prozent. Ihr Nachteil besteht jedoch darin, daß ihre Halbwertsbreite ungefähr 30 bis 50 nm beträgt. Es ist jedoch extrem schwierig und aufwendig, Mikroobjektive mit kurzer Brennweite, d.h. hoher Vergrößerung, im DUV-Wellenlängenbereich für ein so breites DUV-Wellenlängenband zu korrigieren.

Es ist daher Aufgabe der vorliegenden Erfindung, eine Beleuchtungseinrichtung für ein DUV-Mikroskop anzugeben, welche ein DUV-Wellenlängenband mit maximaler Transmission und geringer Halbwertsbreite bereitstellt.

Diese Aufgabe wird gelöst durch eine Beleuchtungseinrichtung, welche die Merkmale des unabhängigen Anspruchs 1 aufweist. Vorteilhafte Ausführungen der Beleuchtungseinrichtung sind in den Unteransprüchen angegeben.

Die Erfindung geht von der Überlegung aus, daß die großen Halbwertsbreiten im wesentlichen durch Polarisationseffekte an den Reflexionsfilter-Systemen verursacht werden. Diese sind für kleinere Reflexionswinkel deutlich geringer. Daher wird in einer erfindungsgemäßen DUV-Beleuchtungseinrichtung ein Reflexionsfilter-System mit kleinen Reflexionswinkeln und spektral angepaßten Reflexionsfiltern verwendet.

Eine erfindungsgemäße Beleuchtungseinrichtung für ein DUV-Mikroskop weist eine Lichtquelle auf, von der ein Beleuchtungsstrahlengang ausgeht. In dem Beleuchtungsstrahlengang sind ein Kollektor und ein Reflexionsfilter-System zur Erzeugung eines gewünschten DUV-Wellenlängenbandes angeordnet. Das Reflexionsfilter-System besteht aus vier Reflexionsfiltern, an denen der Beleuchtungsstrahlengang jeweils im gleichen Reflexionswinkel a reflektiert wird.

Dabei verläuft der Beleuchtungsstrahlengang vor und hinter dem Reflexionsfilter-System koaxial. Erfindungsgemäß beträgt der Reflexionswinkel a an den einzelnen Reflexionsfiltern zwischen α ≤ 30°.

Dabei liefert das Reflexionsfilter-System ein sehr schmales DUV-Wellenlängenband λ_{DUV} + Δλ mit einer Halbwertsbreite von max. 20 nm. Es weist einen Peak mit einem Spitzenwert S von über 90% der eingestrahlten Lichtintensität auf. Je nach verwendeten Reflexionsfiltern kann durch ein Reflexionsfilter-System mit kleinen Einfallswinkeln ein Peak-Spitzenwert S von über 98% der eingestrahlten Lichtintensität erzielt werden. Dazu werden in das Reflexionsfilter-System der erfindungsgemäßen Beleuchtungseinrichtung speziell auf das gewünschte DUV-Wellenlängenband λ_{DUV} + Δλ abgestimmte Reflexionsfilter eingesetzt.

Durch Übergang zu den erfindungsgemäß kleinen Reflexionswinkein α ≤ 30° in dem Reflexionsfilter-System können die Polarisationseffekte an den Reflexionsfiltern verringert und derart schmale Halbwertsbreiten erzielt werden. Für Halbwertsbreiten in der erzielten Größenordnung ist es möglich, passend korrigierte DUV-Mikroskop-Objektive zu berechnen. Gleichzeitig besitzt ein DUV-Mikroskop mit einer erfindungsgemäßen Beleuchtungseinrichtung ausreichend hohe Intensitäten im Beleuchtungsstrahlengang, um auf aufwendige spezielle DUV-empfindliche Kameras, wie z.B. die genannten Frame-Transfer-CCD-Kameras, mit langsamem Bildaufbau zu verzichten.

Die Erfindung wird anhand von Ausführungsbeispielen mithilfe der schematischen Zeichnung näher erläutert. Es zeigen:
- ***Fig. 1:***: eine erfindungsgemäße DUV-Beleuchtungseinrichtung für ein Mikroskop;
- ***Fig. 2:***: wellenlängenabhängige Reflexion an einem Reflexionsfilter-System mit einem kleinen Einfallswinkel α = 22,5, aufgeteilt in Polarisationsanteile;
- ***Fig. 3:***: wellenlängenabhängige Reflexion an einem einzelnen Reflexionsfilter für einen Einfallswinkel α = 15° und eine Bezugswellenlänge λ₀ = 303,5 nm;
- ***Fig. 4:***: wellenlängenabhängige Reflexion an einem einzelnen Reflexionsfilter für einen Einfallswinkel α = 22,5° und eine Bezugswellenlänge λ₀= 308 nm;
- ***Fig. 5:***: wellenlängenabhängige Reflexion an einem einzelnen Reflexionsfilter für einen Einfallswinkel α = 30° und eine Bezugswellenlänge λ₀= 314 nm;
- ***Fig.** 6*:: Bezugswellenlänge λ₀ in Abhängigkeit von dem Einfallswinkel α;
- ***Fig. 7:***: wellenlängenabhängige Reflexion für drei auf verschiedene DUV-Wellenlängen angepaßte Reflexionsfilter-Systeme, jeweils mit einem Einfallswinkel α = 22,5 ,
- ***Fig. 8:***: umschaltbare Beleuchtungseinrichtung für wahlweise VIS- oder DUV-Beleuchtung mit zwei separaten DUV- und VIS-Lichtquellen;
- ***Fig. 9:***: Lage der Lampenbilder für VIS, UV, DUV in einer DUV- Beleuchtungseinrichtung mit einer universellen DUV-VIS-Lichtquelle;
- ***Fig.10:***: umschaltbare Beleuchtungseinrichtung für wahlweise VIS- oder DUV-Beleuchtung mit einer universellen DUV-VIS-Lichtquelle in der Schaltstufe "DUV-Beleuchtung";
- ***Fig.11:***: umschaltbare Beleuchtungseinrichtung aus ***Fig.10*** für wahlweise VIS-oder DUV-Beleuchtung mit einer universellen DUV-VIS-Lichtquelle in des Schaltstufe "VIS-Beleuchtung";
- ***Fig. 12:***: Linearschieber für die umschaltbare Beleuchtungseinrichtung aus ***Fig. 10*** und ***Fig. 11*** mit drei Schaltflächen;

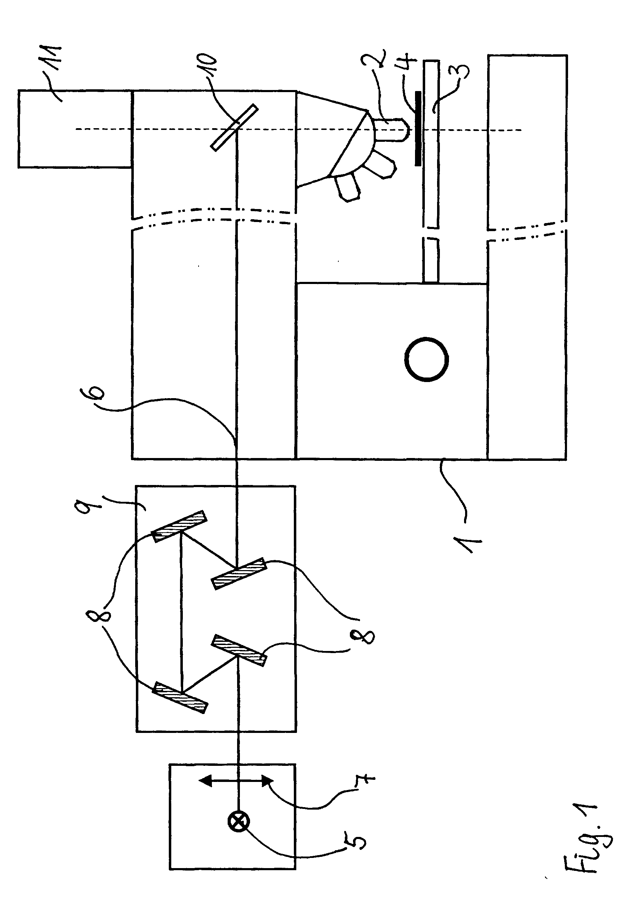

***Fig. 1*** zeigt ein Mikroskop 1 mit Objektiven 2 und einem auf einem Objekttisch 3 liegenden Objekt 4. Als DUV-Lichtquelle 5 wird beispielsweise eine Hg-Drucklampe mit Spektralanteilen im VIS- und UV- und DUV-Wellenlängenbereich verwendet (Definition der Spektralbereiche: VIS = sichtbarer; UV = ultravioletter; DUV = deep UV). Von der Lichtquelle 5 geht ein Beleuchtungsstrahlengang 6 aus, passiert einen Kollektor 7 und ein aus vier Reflexionsfiltern 8 aufgebautes Reflexionsfilter-System 9. Von dort durchläuft der Beleuchtungsstrahlengang 6 eine nicht dargestellte Beleuchtungsoptik, wird an einem Strahlteiler 10 umgelenkt und durch das Objektiv 2 auf das Objekt 4 fokussiert. Der von dem Objekt 4 ausgehende Abbildungsstrahlengang geht durch das Objektiv 2 und den Strahlteiler 10 zur TV-Kamera 11.

Erfindungsgemäß sind die Reflexionsfilter 8 in dem Reflexionsfilter-System 9 so angeordnet, daß der Beleuchtungsstrahlengang 6 an allen Reflexionsfiltern 8 mit demselben kleinen Einfallswinkel α auftrifft. Hier ist ein Winkel von 30° dargestellt. Kleinere Winkel sind erfindungsgemäß möglich. Jedoch können Reflexionsfilters-Filterssysteme mit Einfallswinkeln α < 15° wegen der engen Geometrie nur noch schwierig realisiert werden.

Im dargestellten Beipiel bestehen die auf den gewünschten DUV-Wellenlängenbereich angepaßten Reflexionsfilter 8 aus Aufdampfschichten, die auf Schwarzglas aufgebracht sind. Der gewünschte DUV-Anteil des Lampenlichts wird reflektiert. Die durch die Aufdampfschichten hindurchgehenden Anteile des Lampenlichts, also der verbleibende DUV-Anteil sowie die UV- und VIS-Anteile, werden in dem Schwarzglas absorbiert. Auf diese Weise entsteht eine Beleuchtung mit ausschließlich dem gewünschten DUV-Wellenlängenbereich .

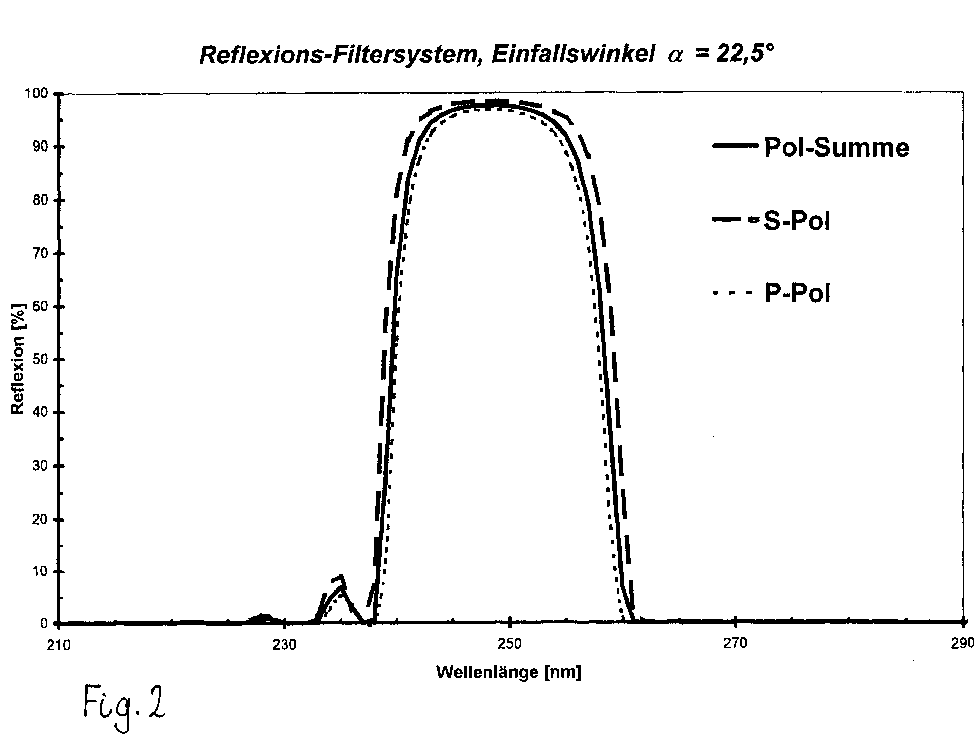

***Fig. 2*** zeigt die Reflexion an einem Reflexionsfilter-System mit einem kleinen Einfallswinkel α = 22,5° in Abhängigkeit von der Wellenlänge. Dargestellt sind die durch Polarisation bei der Reflexion entstehenden Polarisationsanteile mit senkrechter ("S-Pol") und paraller ("P-Pol") Polarisationsrichtung. Diese beiden Kurven liegen sehr dicht beieinander, weil der Polarisationseffekt aufgrund des kleinen Einfallswinkels nur sehr klein ist. Daher weist die Summenkurve "Pol-Summe" aus den beiden Polarisationsrichtungen auch eine nur sehr geringe Halbwertsbreite Δλ mit einem Wert von ca. 20 nm auf. Damit ist das mit einem Reflexionsfilter-System mit kleinem Einfallswinkel erzeugte DUV-Wellenlängenband λ_{DUV} ausreichend schmal, um die DUV-Optik des Mikroskops darauf korrigieren zu können.

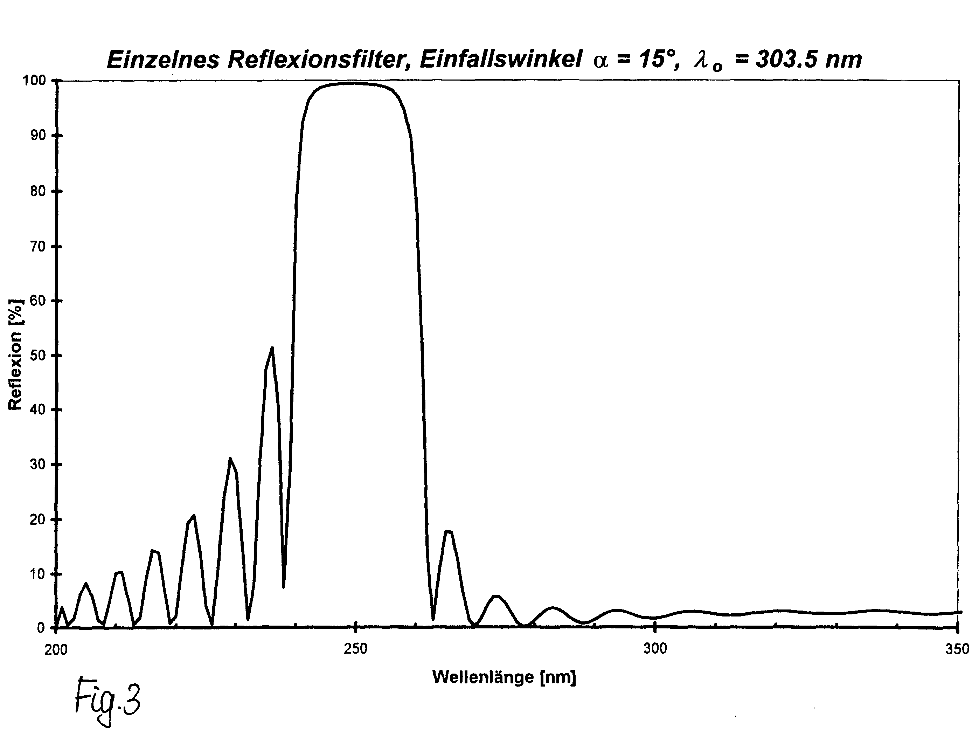

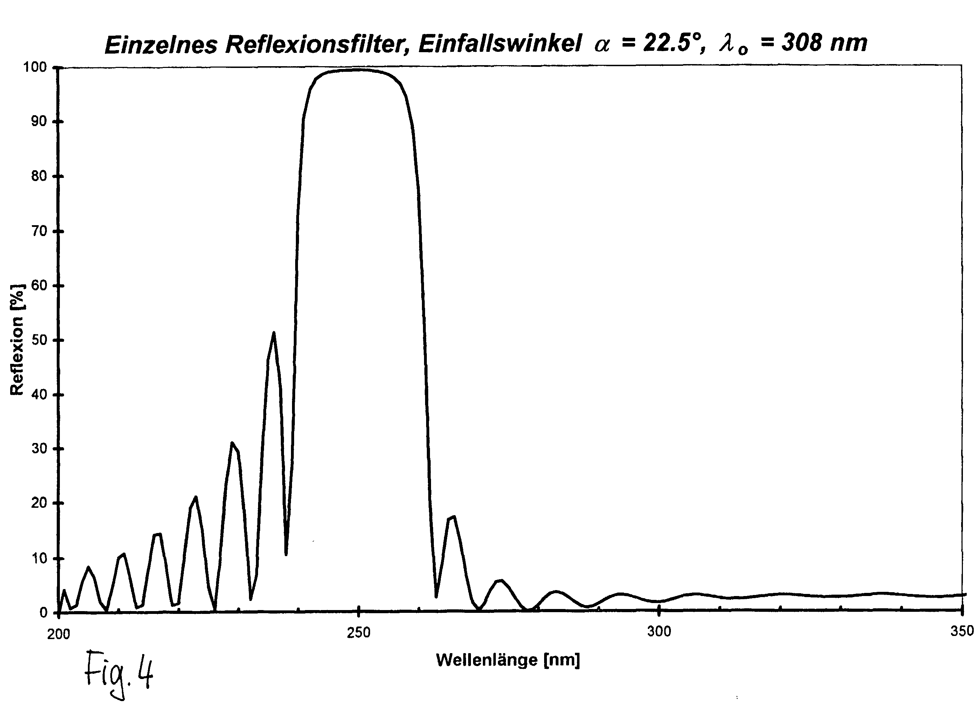

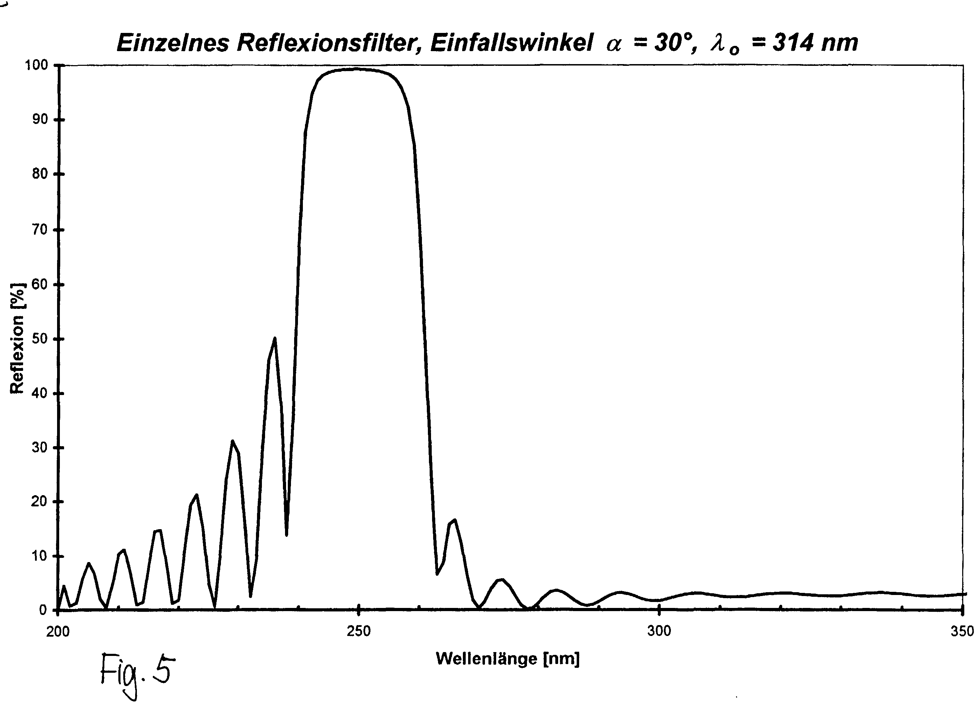

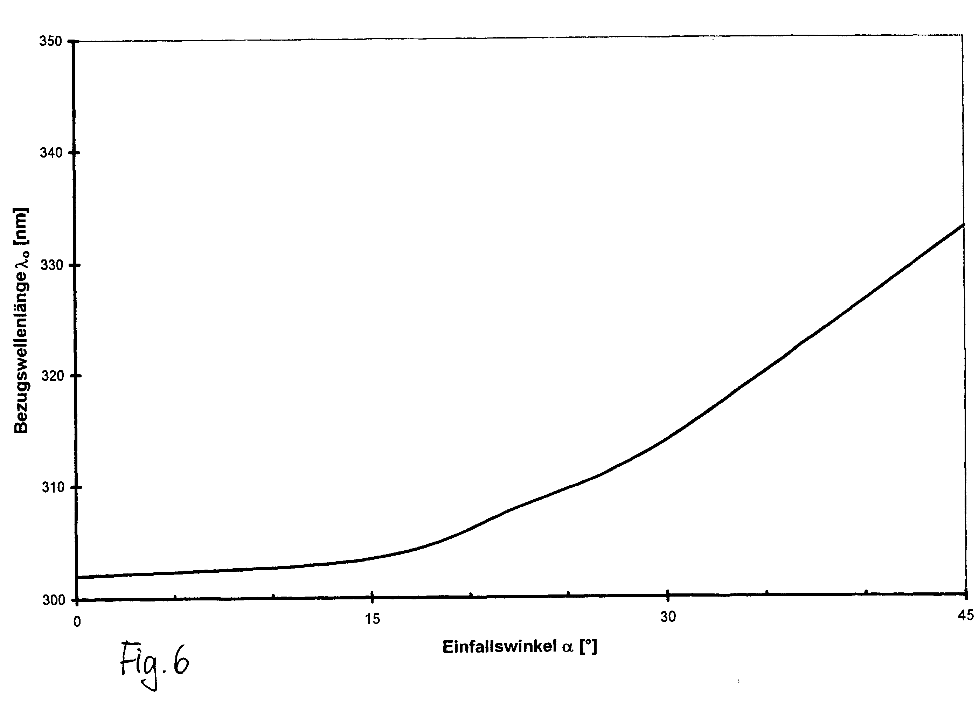

Die ***Fig. 3-5*** zeigen die wellenlängenabhängige Reflexion an unterschiedlichen einzelnen Reflexionsfiltern, die für verschiedene Einfallswinkel α ausgelegt sind. Die Reflexionsfilter besitzen eine Schichtaufbau wie er in Tabelle 1 angegeben ist. Lediglich die Dicken der Schichten werden entsprechend dem gewünschten Einfallswinkel α durch eine Bezugswellenlänge λ₀ , die in die Berechnung der Schichtdicken eingeht, korrigiert. Die zugehörigen Bezugswellenlängen λ₀ sind in den Figuren angegeben. Durch die Anpassung der Schichtdicken besitzen die Reflexionsfilter auch für verschiedene Einfallswinkel ein qualitativ gleiches Reflexionsverhalten. In ***Fig. 6*** ist die Bezugswellenlänge λ₀ in Abhängigkeit von dem Einfallswinkel α dargestellt. Man erkennt, daß für Änderungen zu größeren Einfallswinkeln die Bezugswellenlänge λ₀ deutlich stärker nachkorrigiert werden muß.

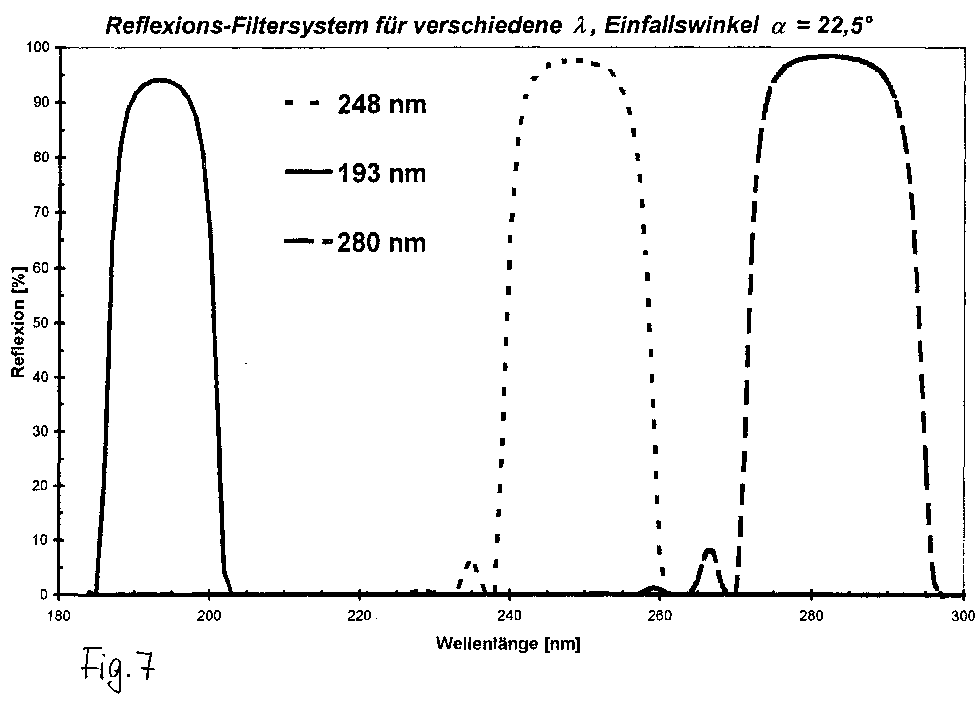

***Fig. 7*** zeigt die wellenlängenabhängige Reflexion für drei auf verschiedene DUV-Wellenlängen angepaßte Reflexionsfilter-Systeme, deren Reflexionsfilter jeweils für denselben Einfallswinkel α = 22,5 ausgelegt sind. Geeignet ist zum Beispiel wieder das Schichten-System aus Tabelle 1. Es ist aber auch möglich andere Schichten-Systeme, z.B. unter Verwendung von SiO₂ und AlO₃, zu konzipieren. Dabei ist es wichtig, Materialien mit möglichst kleine Differenzen ihrer Brechungsindices zu verwenden. Mit dem Schichten-System aus Tabelle 1 kann mindestens für einen DUV-Wellenlängen zwischen 180 und 300 nm ein jeweils für ein schmales DUV-Wellenlängenband passendes Reflexionsfilter-System angeben werden.

Nachfolgend sollen noch zwei Ausführungsbeipiele für eine auf verschiedene Wellenlängenbereiche umschaltbare Beleuchtungseinrichtung erläutert werden.

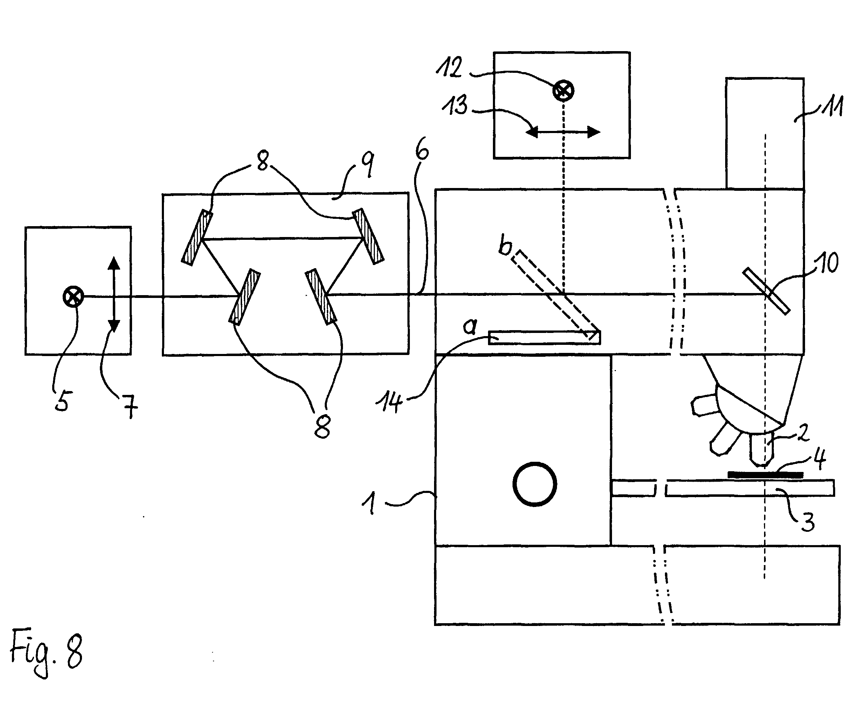

***Fig. 8*** zeigt eine umschaltbare Beleuchtungseinrichtung für wahlweise VIS-oder DUV-Beleuchtung, die mit zwei separaten Lichtquellen für zwei Wellenlängenbereiche ausgestattet ist. Der Aufbau entspricht prinzipiell der ***Fig. 1.*** Dabei weisen gleiche Komponenten gleiche Bezugszeichen auf. Der bereits beschriebenen Beleuchtungseinrichtung aus ***Fig. 1*** mit der DUV-Lichtquelle 5 ist eine zusätzliche VIS-Lichtquelle 12 für den sichtbaren Spektralbereich hinzugefügt. Diese VIS-Lichtquelle 12 ist beispielsweise eine Hg-Glühlampe, die nur Spektralanteile im VIS-Wellenlängenbereich, jedoch keine im UV- und DUV- Wellenlängenbereich abstrahlt.

Das Licht dieser VIS-Lichtquelle 12 durchtritt einen Kollektor 13 und wird nur dann senkrecht in den Beleuchtungsstrahlengang 6 eingekoppelt, wenn sich ein zusätzlich eingebauter, schwenkbarer Spiegel 14 im Beleuchtungsstrahlengang 6 in der Position "b" befindet. Dann gelangt das VIS-Licht auf dem folgenden Teil des Beleuchtungsstrahlengangs 6 zum Objekt 4. Um eine DUV-Beleuchtung einzustellen, wird der Schwenkspiegel 14 in die Position "a" gebracht. Dann gelangt das Licht der DUV-Lichtquelle 5 wie in ***Fig. 1*** zum Objekt 4.

Der beschriebene Aufbau benötigt zwar eine zweite Lichtquelle, ist aber durch den Schwenkspiegel 14 einfach zu realisieren. Außerdem erweitert der Aufbau die Nutzungsmöglichkeiten des Mikroskops erheblich. So strahlt die DUV-Lichtquelle 5 , z.B. eine Hg-Bogenlampe, zwar auch im UV- und VIS-Wellenlängenbereich ab. Sie besitzt jedoch nur einen kleinen Lichtbogen, der bei schwächeren VIS-Objektiven die Pupille nicht ausfüllen kann und damit keine Beleuchtung für diese Objektive ermöglicht. Außerdem ist die DUV-Lichtquelle 5 nicht dimmbar.

Demgegenüber besitzt die VIS-Lichtquelle, z.B. eine Halogen-Glühlampe, eine ausreichend große Glühwendel zur ausreichenden Beleuchtung auch mit schwächeren VIS-Objektiven und ist dimmbar. UV- oder DUV-Anteile weist ihr Spektrum nicht auf. Daher kann mit dem beschriebenen Aufbau ein DUV-Mikroskop mit allen Möglichkeiten der VIS-Betrachtung ausgestattet werden.

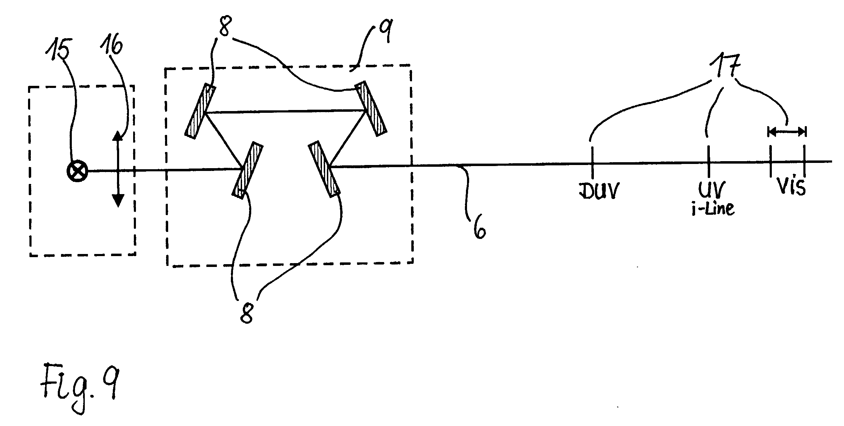

Wenn man einen Aufbau mit nur einer Lichtquelle realisieren will, muß man die Verschiebung des Bildes des Lichtquelle für verschiedene Wellenlängen beachten. In ***Fig. 9*** ist die unterschiedliche Lage der Bilder einer universellen Lichtquelle für den VIS- und UV- und DUV-Wellenlängenbereich in einer DUV-Beleuchtungseinrichtung dargestellt. Das Licht der Lichtquelle 15 durchtritt einen Kollektor 16 und ein Reflexionsfilter-System 9, das aus vier Reflexionsfiltern 8 aufgebaut ist. Die Reflexionsfilter 8 sind auf Schwarzglas aufgedampft.

Die unterschiedlichen Lagen des Bildes 17 der Lichtquelle 15 für die DUV-Wellenlänge 248 nm, die sogenannte "i-line" 365 nm und den sichtbaren VIS-Wellenlängenbereich sind schematisch dargestellt. Um das Bild 17 der Lichtquelle 15 an einer Position festzuhalten, müßte die Lichtquelle 15 für unterschiedliche spektrale Beleuchtungsverfahren in Richtung des Beleuchtungsstrahlengangs 6 verschoben werden.

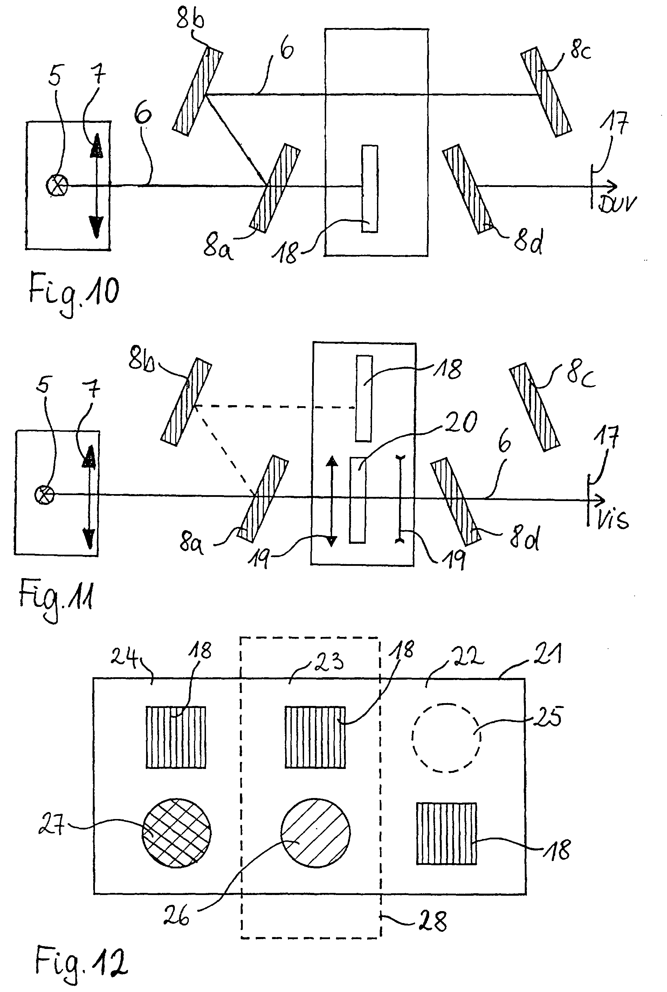

Eine Alternative dazu zeigen die ***Fig. 10-11***. Dargestellt ist jeweils eine umschaltbare Beleuchtungseinrichtung für wahlweise VIS- oder DUV-Beleuchtung, die mit nur einer universellen DUV-VIS-Lichtquelle arbeitet. Hierfür wird die DUV-Lichtquelle 5 genommen, die beispielsweise eine Hg-Bogenlampe ist. Von der DUV-Lichtquelle 5 geht ein Beleuchtungsstrahlengang 6 aus, in dem ein Kollektor 7 und ein Reflexionsfilter-System 9 mit vier Reflexionsfiltern 8 angeordnet sind. Die vier Reflexionsfilter 8 sind hier zur Unterscheidung ihrer räumlichen Lage einzeln mit 8a, 8b, 8c und 8d bezeichnet. Die Reflexionsfilter 8a, 8b, 8c und 8d sind in diesem Beispiel auf einem für alle Wellenlängenbereiche transparenten Trägermaterial, d.h. Quarzglas, aufgedampft.

***Fig.10*** zeigt die beschriebene Beleuchtungseinrichtung in der Schaltstufe "DUV-Beleuchtung". Dabei ist zwischen dem Reflexionsfilter 8a und dem Reflexionsfilter 8d ein Licht-Stopper 18 eingefügt. Das kann eine beliebige opake Platte sein, z.B. aus Metall. Dadurch wird der durch das Reflexionsfilter 8a hindurchgehende Anteil des Lampenlichts gestoppt, so daß nur das reflektierte DUV-Wellenlängenband zur Beleuchtung genutzt wird. Die Lage 17 des Bildes der Lichtquelle 5 ist angegeben.

***Fig.11*** zeigt die beschriebene Beleuchtungseinrichtung in der Schaltstufe "VIS-Beleuchtung". Dabei ist zwischen dem Reflexionsfilter 8a und dem Reflexionsfilter 8d eine Kombination aus Linsen 19 und mindestens einem Filter 20 eingefügt, die für den VIS-Bereich ausgewählt sind. Dabei verschieben die Linsen 19 die Lage 17 des VIS-Bildes der Lichtquelle zu der Lage des DUV-Bildes der Lichtquelle. Das Filter 20 kann ein Farbfilter oder Graufilter etc. sein. Zwischen dem Reflexionsfilter 8b und dem Reflexionsfilter 8d ist ein Licht-Stopper 18 eingefügt, um während der VIS-Beleuchtung jeden DUV-Anteil aus der Beleuchtung auszuschließen.

***Fig. 12*** zeigt einen Linearschieber 21, mit dem die beiden Schaltstufen aus ***Fig. 10*** und ***Fig. 11*** und noch eine Schaltstufen weitere realisiert werden können. Der Linearschieber 21 zeigt drei Schaltflächen 22, 23, 24 für unterschiedliche spektrale Beleuchtungsvarianten auf. Der Linearschieber 21 wird senkrecht in den Beleuchtungsstrahlengang 6 in das Reflexionsfilter-System 9 eingefügt, so daß sich seine obere Hälfte stets zwischen dem Reflexionsfilter 8b und dem Reflexionsfilter 8c und seine untere Hälfte stets zwischen dem Reflexionsfilter 8a und dem Reflexionsfilter 8d befindet. Dabei wird wahlweise immer nur eine der Schaltflächen 22, 23, 24 in den Beleuchtungsstrahlengang 6 eingefügt. Die Position 28 des Reflexionsfilter-Systems ist durch eine gestrichelten Rahmen dargestellt. In der ***Fig. 12*** ist daher aktuell die Schaltfläche 23 in das Reflexionsfilter-System eingefügt.

Die Schaltfläche 22 erzeugt eine DUV-Beleuchtung, entspricht also der ***Fig. 10***. In ihrer oberen Hälfte ist eine freie Öffnung 25 angeordnet, um das DUV-Licht durchzulassen. In ihrer unteren Hälfte ist, entsprechend ***Fig. 10***, ein Licht-Stopper 18 angeordnet.

Die Schaltfläche 23 erzeugt eine VIS-Beleuchtung, entspricht also der ***Fig. 11***. In ihrer oberen Hälfte ist ein Licht-Stopper 18 angeordnet, um das DUV-Licht zu stoppen. In ihrer unteren Hälfte ist, entsprechend ***Fig. 11***, eine Linsen-Filter-Kombination 26 aus Linsen und mindestens einem Filter eingefügt, welche für den VIS-Bereich ausgewählt sind. Dabei korrigieren die Linsen die Lage des Bildes der Lichtquelle. Die Filter sind beliebig wählbar, z.B. Farbfilter, Graufilter, Fluoreszenzfilter etc..

Mit der Schaltfläche 24 kann eine weitere Beleuchtung mit Wellenlängen au-βerhalb des DUV-Wellenlängenbandes eingestellt werden. In ihrer oberen Hälfte ist wieder ein Licht-Stopper 18 angeordnet, um das DUV-Licht zu stoppen. In ihrer unteren Hälfte ist eine beliebige Linsen-Filter-Kombination 27 eingefügt, die beispielsweise für die sogenannte "i-line" bei 365 nm ausgewählt ist.

Durch Verschieben des Linearschiebers 21 kann in einfacher Weise zwischen den verschiedenen spektralen Beleuchtungsvarianten DUV, VIS und beispielsweise "i-line" umgeschaltet werden. Dabei ergibt sich im Hinblick auf die sehr hohen Lichtintensitäten der Lichtquelle 5, z.B. in Form einer Hg-Bogenlampe, ein weiterer Vorteil, der die Augensicherheit betrifft. In der Schaltstufe "DUV" wird ohnehin so wenig Lichtenergie durchgelassen, daß die Augensicherheit gegeben ist. In allen Schaltstufen, die keine DUV-Beleuchtung realisieren, wird aber die gesamte übrige Lichtenergie außerhalb des schmalen DUV-Wellenlängenbandes durch das Reflexionsfilter 8a durchgelassen. In diesen Schaltstufen sind jedoch stets Filter 20 in dem Beleuchtungsstrahlengang 6 angeordnet. Indem hierbei eine ausreichende Intensitätsdämpfung durch geeignete Wahl der Filter 20 stattfindet, wird auf einfache Weise ein stets augensicherer Betrieb des Mikroskops 1 gewährleistet.

**Tabelle 1:**

| Schichtaufbau eines Reflexionsfilters | | | | | |
|---|---|---|---|---|---|
| es sind: L = Al₂O₃ ; S = SiO₂ ; λ₀ = 308 nm ; α = 22.5° | | | | | |

| **Nr.** | **Dicke [λ**_{**0**}**/4]** | **Material** | **Nr.** | **Dicke [λ**_{**0**}**/4]** | **Material** |
|---|---|---|---|---|---|
| 1 | 0,25 | L | 29 | 0,92 | L |
| 2 | 0,94 | S | 30 | 0,72 | S |
| 3 | 0,66 | L | 31 | 0,92 | L |
| 4 | 0,72 | S | 32 | 0,72 | S |
| 5 | 0,92 | L | 33 | 0,92 | L |
| 6 | 0,72 | S | 34 | 0,72 | S |
| 7 | 0,92 | L | 35 | 0,92 | L |
| 8 | 0,72 | S | 36 | 0,72 | S |
| 9 | 0,92 | L | 37 | 0,92 | L |
| 10 | 0,72 | S | 38 | 0,72 | S |
| 11 | 0,92 | L | 39 | 0,92 | L |
| 12 | 0,72 | S | 40 | 0,72 | S |
| 13 | 0,92 | L | 41 | 0,92 | L |
| 14 | 0,72 | S | 42 | 0,72 | S |
| 15 | 0,92 | L | 43 | 0,92 | L |
| 16 | 0,72 | S | 44 | 0,72 | S |
| 17 | 0,92 | L | 45 | 0,92 | L |
| 18 | 0,72 | S | 46 | 0,72 | S |
| 19 | 0,92 | L | 47 | 0,92 | L |
| 20 | 0,72 | S | 48 | 0,72 | S |
| 21 | 0,92 | L | 49 | 0,92 | L |
| 22 | 0,72 | S | 50 | 0,72 | S |
| 23 | 0,92 | L | 51 | 0,92 | L |
| 24 | 0,72 | S | 52 | 0,72 | S |
| 25 | 0,92 | L | 53 | 0,92 | L |
| 26 | 0,72 | S | 54 | 0,67 | S |
| 27 | 0,92 | L | 55 | 0,68 | L |
| 28 | 0,72 | S | 56 | 1,75 | S |

### Bezugszeichenliste

- 1:: Mikroskop
- 2:: Objektiv
- 3:: Objekttisch
- 4:: Objekt
- 5:: DUV-Lichtquelle
- 6:: Beleuchtungsstrahlengang
- 7:: Kollektor
- 8:: Reflexionsfilter, auch 8a, 8b, 8c, 8d
- 9:: Reflexionsfilter-System
- 10:: Strahlteiler
- 11:: TV-Kamera
- 12:: VIS-Lichtquelle
- 13:: Kollektor
- 14:: schwenkbarer Spiegel
- 15:: universelle DUV-VIS-Lichtquelle
- 16:: Kollektor
- 17:: Bild der Lichtquelle
- 18:: Licht-Stopper
- 19:: Linsen
- 20:: Filter
- 21:: Linearschieber
- 22:: Schaltfläche für DUV-Beleuchtung
- 23:: Schaltfläche für VIS-Beleuchtung
- 24:: Schaltfläche für eine weitere Beleuchtung
- 25:: freie Öffnung
- 26:: Linsen-Filter-Kombination für VIS-Beleuchtung
- 27:: Linsen-Filter-Kombination für eine weitere Beleuchtung
- 28:: Position des Reflexionsfilter-Systems

## Patentansprüche

1. Beleuchtungseinrichtung für ein DUV-Mikroskop (1) mit einem von einer DUV-Lichtquelle (5) ausgehenden Beleuchtungsstrahlengang (6), in dem ein Kollektor (7) und ein Reflexionsfilter-System (9) angeordnet sind, welches ein DUV-Wellenlängenband erzeugt und **dadurch gekennzeichnet, daß** das Reflexionsfilter-System (a) aus vier Reflexionsfiltern (8) besteht, an denen der Beleuchtungsstrahlengang (6) jeweils im gleichen Reflexionswinkel α ≤30° reflektiert wird, wobei vor und hinter dem Reflexionsfilter-System (9) der Beleuchtungsstrahlengang (6) koaxial verläuft, wobei das DUV-Wellenlängenband λ_{DUV} + Δλ eine Halbwertsbreite von max. 20 nm und einen Peak mit einem Spitzenwert S von über 90% der eingestrahlten Lichtintensität hat.

2. Beleuchtungseinrichtung nach Anspruch 1,
**dadurch gekennzeichnet,**
**daß** jedes Reflexionsfilter (8) ein Interferenzfilter-System mit mehreren abwechselnd auf ein Substrat aufgedampften Schichten aus Al₂O₃ und SiO₂ ist, deren Dicken von einer Bezugswellenlänge λ₀ abgeleitet werden, und daß die Schichten gemäß Tabelle 1 aufgebaut sind.

3. Beleuchtungseinrichtung nach Anspruch 1,
**dadurch gekennzeichnet, daß**
zusätzlich eine VIS-Lichtquelle (12) für den sichtbaren VIS-Spektralbereich in der Nähe des Beleuchtungsstrahlengangs (6) sowie schaltbare optische Mittel zum wahlweisen Schalten einer DUV-Beleuchtung oder einer VIS-Beleuchtung angeordnet sind.

4. Beleuchtungseinrichtung nach Anspruch 1,
**dadurch gekennzeichnet, daß**
zusätzliche optische Mittel in der Nähe des Beleuchtungsstrahlengangs (6) angeordnet sind, welche aus dem Licht der DUV-Lichtquelle (5) entweder ausschließlich deren DUV-Anteile in den Beleuchtungsstrahlengang bringen und die anderen Spektralanteile unterdrücken oder umgekehrt die DUV-Anteile unterdrücken und die anderen Spektralanteile in den Beleuchtungsstrahlengang bringen.

5. Beleuchtungseinrichtung nach Anspruch 4,
**dadurch gekennzeichnet, daß**
die Reflexionsfilter (8) auf einem transparenten Material aufgedampft sind und die optischen Mittel in das Reflexionsfilter-System (9) eingreifen.

6. Beleuchtungseinrichtung nach Anspruch 5,
**dadurch gekennzeichnet, daß**
die optischen Mittel Licht-Stopper (18), Linsen (19) und Filter (20) umfassen.

7. Beleuchtungseinrichtung nach Anspruch 5,
**dadurch gekennzeichnet, daß**
die optischen Mittel auf einem Linearschieber (21) angeordnet sind, der in das Reflexionsfilter-System (9) eingeschoben wird und mehrere in den Beleuchtungsstrahlengang (6) einfügbare Schaltflächen (22, 23, 24) aufweist, wobei
- eine erste Schaltfläche (22), die einen Licht-Stopper (18) hinter dem ersten Reflexionsfilter einfügt, eine DUV-Beleuchtung erzeugt
- und mindestens eine zweite Schaltfläche (22, 23), die einen Licht-Stopper (18) hinter dem zweiten Reflexionsfilter (8b) einfügt sowie zugleich eine Filter-Linsen-Kombination (26, 27) hinter dem ersten Reflexionsfilter (8a) einfügt, eine Beleuchtung in einem weiteren Spektralbereich erzeugt.

8. Beleuchtungseinrichtung nach Anspruch 5,
**dadurch gekennzeichnet, daß**
der Linearschieber (21) eine zweite oder zusätzliche weitere Schaltfläche (23, 24) mit Filtern (20) für Fluoreszenzbeleuchtung aufweist.

## Claims

1. Illumination device for a DUV microscope (1), having an illumination beam path (6), proceeding from a DUV light source (5), in which are arranged a condenser (7) and a reflection filter system (9) which generates a DUV wavelength band and **characterized in that** the reflection filter system (9) comprises four reflection filters (8) at which the illumination beam path (6) is reflected in each case at the same reflection angle α ≤ 30°, the illumination beam path (6) extending coaxially in front of and behind the reflection filter system (9), wherein the DUV wavelength band λ_{DUV} + ?λ has a half-value width of max. 20 nm and a peak with a maximum value S of more than 90% of the incoming light intensity.

2. Illumination device according to Claim 1, **characterized in that** each reflection filter (8) is an interference filter system having a plurality of layers of Al₂O₃ and SiO₂, alternatingly vapour-deposited onto a substrate, whose thicknesses are derived from a reference wavelength λ₀ and **in that** the layers are constructed in accordance with Table 1.

3. Illumination device according to Claim 1, **characterized in that** in addition a VIS light source (12) for the visible VIS spectral region is arranged in the vicinity of the illumination beam path (6), and switchable optical means for selectable switching of a DUV illumination or a VIS illumination are arranged.

4. Illumination device according to Claim 1, **characterized in that** arranged in the vicinity of the illumination beam path (6) are additional optical means which, from the light of the DUV light source (5), either exclusively bring its DUV components into the illumination beam path and suppress the other spectral components or, conversely, suppress the DUV components and bring the other spectral components into the illumination beam path.

5. Illumination device according to Claim 4, **characterized in that** the reflection filters (8) are vapour-deposited onto a transparent material, and the optical means engage into the reflection filter system (9).

6. Illumination device according to Claim 5, **characterized in that** the optical means comprise light stoppers (18), lenses (19), and filters (20).

7. Illumination device according to Claim 5, **characterized in that** the optical means are arranged on a linear slider (21) that is slid into the reflection filter system (9) and has a plurality of switching surfaces (22, 23, 24) that can be inserted into the illumination beam path (6), wherein
- a first switching surface (22), which inserts a light stopper (18) behind the first reflection filter, generates a DUV illumination; and
- at least one second switching surface (22, 23), which inserts a light stopper (18) behind the second reflection filter (8b) and at the same time inserts a filter/lens combination (26, 27) behind the first reflection filter (8a), generates an illumination in a further spectral region.

8. Illumination device according to Claim 5, **characterized in that** the linear slider (21) has a second or additional further switching surface (23, 24) having filters (20) for fluorescent illumination.

## Revendications

1. Dispositif d'éclairage pour un microscope pour l'ultraviolet profond (1) comprenant une trajectoire de faisceau d'éclairage (6) émanant d'une source de lumière ultraviolette profonde (5) dans laquelle sont disposés un collecteur (7) et un système de filtres de réflexion (9), lequel produit une bande de longueurs d'onde de l'ultraviolet profond et **caractérisé en ce** le système de filtres de réflexion (9) se compose de quatre filtres de réflexion (8) sur lesquels la trajectoire de faisceau d'éclairage (6) est réfléchie à chaque fois selon le même angle de réflexion α ≤ 30°, le trajet de faisceau d'éclairage (6) s'étendant de manière coaxiale devant et derrière le système de filtres de réflexion (9), la bande de longueurs d'onde de l'ultraviolet profond λ_{DUV} + Δλ ayant une largeur de valeur moyenne de 20 nm max. et une crête ayant une valeur de crête S supérieure à 90 % de l'intensité lumineuse incidente.

2. Dispositif d'éclairage selon la revendication 1, **caractérisé en ce que** chaque filtre de réflexion (8) est un système de filtre à interférences comprenant plusieurs couches d'Al₂O₃ et de SiO₂ métallisées sous vide en alternance sur un substrat dont l'épaisseur peut être déduite d'une longueur d'onde de référence λ₀ et que les couches sont constituées conformément au tableau 1.

3. Dispositif d'éclairage selon la revendication 1, **caractérisé en ce qu'**une source de lumière visible (12) pour la plage spectrale visible est en plus disposée à proximité de la trajectoire de faisceau d'éclairage (6) ainsi que des moyens optiques commutables pour commuter, au choix, un éclairage ultraviolet profond ou un éclairage visible.

4. Dispositif d'éclairage selon la revendication 1, **caractérisé en ce que** des moyens optiques supplémentaires sont disposés à proximité de la trajectoire de faisceau d'éclairage (6), lesquels amènent dans la trajectoire de faisceau d'éclairage soit exclusivement les composantes ultraviolettes profondes de la lumière provenant de la source de lumière ultraviolette profonde (5) et atténuent les autres composantes spectrales, soit à l'inverse, atténuent les composantes ultraviolettes profondes et amènent les autres composantes spectrales dans la trajectoire de faisceau d'éclairage.

5. Dispositif d'éclairage selon la revendication 4, **caractérisé en ce que** les filtres de réflexion (8) sont appliqués par évaporation sur un matériau transparent et les moyens optiques pénètrent dans le système de filtres de réflexion (9).

6. Dispositif d'éclairage selon la revendication 5, **caractérisé en ce que** les moyens optiques comprennent des bloqueurs de lumière (18), des lentilles (19) et des filtres (20).

7. Dispositif d'éclairage selon la revendication 5, **caractérisé en ce que** les moyens optiques sont disposés sur un coulisseau linéaire (21) qui est introduit dans le système de filtres de réflexion (9) et présente plusieurs surfaces de commutation (22, 23, 24) pouvant être introduites dans la trajectoire de faisceau d'éclairage (6),
- une première surface de commutation (22) qui insère un bloqueur de lumière (18) derrière le premier filtre de réflexion générant un éclairage ultraviolet profond
- et au moins une deuxième surface de commutation (22, 23) qui insère un bloqueur de lumière (18) derrière le deuxième filtre de réflexion (8b) et insère en même temps une combinaison filtre/lentille (26, 27) derrière le premier filtre de réflexion (8a) générant un éclairage dans une autre plage spectrale.

8. Dispositif d'éclairage selon la revendication 5, **caractérisé en ce que** le coulisseau linéaire (21) présente une deuxième surface de commutation ou une surface de commutation supplémentaire (23, 24) avec des filtres (20) pour un éclairage fluorescent.
